# EUROPÄISCHE PATENTANMELDUNG

(11) **EP 0 809 386 A2**
(43) Veröffentlichungstag der Anmeldung: **26.11.1997**
(21) Anmeldenummer: 97106738.4
(22) Anmeldetag: 23.04.1997
(51) Int. Cl.: H04M 1/72

(54) **Einrichtung für Schnurlostelefone**

(30) Priorität: 23.05.1996 DE 19620834
(71) Anmelder: NOKIA MOBILE PHONES LTD., 02150 Espoo (FI)
(72) Erfinder: Umbach, Dirk, 45525 Hattingen (DE); Michalzik, Dirk, 45964 Gladbeck (DE); Weber, Rainer, 76337 Waldbronn (DE)
(74) Vertreter: TER MEER STEINMEISTER & PARTNER GbR

(57) **Zusammenfassung**

Eine erfindungsgemäße Einrichtung (1) für Schnurlostelefone (4), zu der eine Basisstation (2) und wenigstens eine Ladestation (3) gehören, um über die Ladestation (3) einen Akkumulator eines Schnurlostelefons (4) zu laden, wenn sich dieses in der Ladestation (3) befindet, zeichnet sich durch eine mechanische Verbindungseinrichtung (10, 11, 14, 17) zur lösbaren Verbindung von Ladestation (3) und Basisstation (2) miteinander aus. Dadurch ergeben sich flexiblere Einsatzmöglichkeiten für die Ladestation (3).

## Beschreibung

Die Erfindung betrifft eine Einrichtung für schnurlose Telefone gemäß dem Oberbegriff des Patentanspruchs 1.

Schnurlostelefone arbeiten üblicherweise mit einer Basisstation zusammen, mit der sie über eine Funkstrecke in Verbindung stehen. Die Basisstation befindet sich in der Regel in privaten Haushalten, Büro- oder Fabrikgebäuden, usw., und ermöglicht eine Kommunikation von zur selben Basisstation gehörenden Schnurlostelefonen untereinander oder über ein privates oder öffentliches Fernsprechnetz mit anderen Teilnehmern. Mit diesen Fernsprechnetzen kann die Basisstation über eine Datenleitung oder über eine weitere Funkstrecke in Verbindung stehen. Die Energieversorgung der Basisstation erfolgt im allgemeinen über eine Speiseleitung von einer vor Ort vorhandenen Stromversorgung, die beispielsweise in Form eines Netzteils vorliegen kann.

Die Schnurlosfelefone selbst enthalten in ihrem Innern zur Energieversorgung einen Akkumulator, der von Zeit zu Zeit nachgeladen werden muß. Hierzu ist es bereits bekannt, sogenannte Ladestationen zu verwenden, die getrennt von der Basisstation vorhanden sind. Diese Ladestationen sind über eine Speiseleitung mit einer vor Ort vorhanden Stromquelle, beispielsweise mit einem Netzteil, verbunden und enthalten in ihrem Innern eine Ladeschaltung zur Aufladung des Akkumulators eines Schnurlostelefons, wenn dieses in eine entsprechende Aufnahme der Ladestation eingesetzt worden ist.

Andererseits sind bereits Basisstationen bekannt, die eine integrierte Ladestation aufweisen. In diesem Fall wird die Ladestation über die Basisstation mit Energie versorgt.

Der Erfindung liegt die Aufgabe zugrunde, bei einer Einrichtung der eingangs genannten Art eine höhere Flexibilität hinsichtlich des Einsatzorts der Ladestation zu erreichen.

Die Lösung der gestellten Aufgabe ist im kennzeichnenden Teil des Patentanspruchs 1 angegeben. Vorteilhafte Ausgestaltungen sind den Unteransprüchen zu entnehmen.

Eine erfindungsgemäße Einrichtung für Schnurlostelefone, zu der eine Basisstation und wenigstens eine Ladestation gehören, um über die Ladestation einen Akkumulator eines Schnurlostelefons zu laden, wenn sich dieses in der Ladestation befindet, zeichnet sich aus durch eine mechanische Verbindungseinrichtung zur lösbaren Verbindung von Ladestation und Basisstation miteinander.

Basisstation und Ladestation lassen sich somit je nach Bedarf in einfacher Weise und schnell durch Zusammensetzen kombinieren oder wieder voneinander trennen, so daß ein flexiblerer Einsatz der gesamten Einrichtung möglich ist. Gegenüber einer Einrichtung, bei der die Ladestation unlösbar mit der Basisstation verbunden ist, weist die erfindungsgemäße Einrichtung den Vorteil auf, daß für den Fall einer Aufladung des Schnurlostelefons an einem von der Basisstation entfernten Ort keine weitere Ladestation erforderlich ist, da die Ladestation von der Basisstation abgenommen und mitgenommen werden kann. Für einen derartigen Anwendungsfall würden sich die Kosten des Gesamtsystems verringern. Andererseits wird gegenüber einer Einrichtung, bei der schon von der Basisstation getrennte Ladestationen vorhanden sind, der Vorteil erzielt, daß eine dieser Ladestationen fest mit der Basisstation verbunden werden kann, um sicherzustellen, daß auch am Ort der Basisstation immer eine Auflademöglichkeit für die Schnurlostelefone gegeben ist.

Nach einer vorteilhaften Ausgestaltung der Erfindung ist die Ladestation auf eine obere Fläche der Basisstation aufsetzbar. Dies ermöglicht eine platzsparende Aufstellung der aus Basisstation und Ladestation zusammengesetzten Einrichtung.

Nach einer anderen vorteilhaften Ausgestaltung der Erfindung liegt die mechanische Verbindungseinrichtung im Bereich der oberen Fläche der Basisstation und läßt sich daher leicht auffinden und betätigen. Dabei kann die mechanische Verbindungseinrichtung auch etwa mittig in dieser Fläche angeordnet sein, wodurch vermieden wird, daß sich die Einrichtung infolge der mechanischen Verbindungseinrichtung verbreitert.

Nach einer noch weiteren Ausgestaltung der Erfindung ist die mechanische Verbindungseinrichtung als Rast-/Schnappmechanismus ausgebildet. Dadurch lassen sich Basisstation und Ladestation sehr einfach miteinander verbinden und wieder voneinander trennen, ohne daß hierzu besonderes Werkzeug erforderlich wäre.

Nach einer Weiterbildung der Erfindung sind Positionierungsmittel vorhanden, um die Ladestation relativ zur Basisstation zu positionieren, wenn beide miteinander verbunden sind. Nimmt die Ladestation relativ zur Basisstation nicht die vorgeschriebene Stellung ein, so verhindern die Positionierungsmittel schon beim Aufsetzen der Ladestation auf die Basisstation eine weitere Annäherung zwischen beiden, so daß noch keine mechanische Verbindung zustande kommt. Diese erfolgt erst bei richtiger Ausrichtung beider Stationen relativ zueinander, so daß Fehlpositionierungen der Ladestation vermieden werden.

Dabei können als Positioniermittel auch Teile der mechanischen Verbindungseinrichtung dienen, was zu einem kompakteren Aufbau führt.

Die mechanische Verbindungseinrichtung kann vorzugsweise in Form einer Steckverbindung vorliegen, wenn sie zwischen der oberen Fläche der Basisstation und der unteren Fläche der Ladestation vorhanden ist. Dabei kann ein steckerbildender Ansatz von einer dieser Flächen vorstehen und eine buchsenbildende Öffnung in der anderen Fläche vorhanden sein.

Nach einer sehr vorteilhaften Ausgestaltung der Erfindung ist zusätzlich zur mechanischen Verbindungseinrichtung auch eine elektrische Verbindungseinrichtung zur elektrischen Verbindung von Ladestation und Basisstation miteinander vorhanden, um die Ladestation über die Basisstation mit Energie zu versorgen, wenn beide mechanisch miteinander verbunden sind. Für diesen Fall braucht die Ladestation nicht länger mit ihrer ursprünglichen Speiseleitung verbunden zu bleiben, was die Aufstellung der aus Basisstation und Ladestation verbundenen Einheit erleichtert.

Vorzugsweise kann dabei die elektrische Verbindungseinrichtung im Bereich der oberen Fläche der Basisstation angeordnet sein, so daß beim Aufsetzen der Ladestation auf die obere Fläche der Basisstation gleichzeitig die mechanische und die elektrische Verbindung herstellbar sind. Dabei kann die elektrische Verbindungseinrichtung als Stecker-/Buchsenverbindung ausgebildet sein, was den Aufsetzvorgang der Ladestation auf die Basisstation erheblich vereinfacht.

Nach einer noch weiteren Ausgestaltung der Erfindung ist die elektrische Verbindungseinrichtung in die mechanische Verbindungseinrichtung integriert. Dies hat den Vorteil, daß beide Verbindungseinrichtungen räumlich dicht benachbart liegen, so daß sich beim Aufsetzen der Ladestation auf die Basisstation der Ausrichtvorgang vereinfacht. Dabei kann die mechanische Verbindungseinrichtung wenigstens zum Teil auch als elektrische Verbindungseinrichtung ausgebildet sein. Für den Fall von Rastmitteln können diese z. B. aus Metall bestehen, so daß sie einerseits die mechanische Rastwirkung erzielen und andererseits eine elektrische Verbindung zwischen Basisstation und Ladestation herstellen können.

Nach einer vorteilhaften anderen Weiterbildung der Erfindung enthält die Ladestation außer einer Ladeschaltung einen Akkumulator. Hierdurch ist es möglich, die Ladestation über einen gewissen Zeitraum unabhängig von einem Netzanschluß zu betreiben, z. B. im Freien.

Dabei kann die Ladestation eine Umschalteinrichtung zur Umschaltung der Ladeschaltung enthalten, derart, daß durch diese Ladeschaltung bei Stromzufuhr von außen die Akkumulatoren sowohl des Schnurlostelefons als auch der Ladestation aufladbar sind, während bei Unterbrechung der Stromzufuhr von außen der Akkumulator des Schnurlostelefons durch den Akkumulator der Ladestation aufladbar ist.

Stromzufuhr von außen bedeutet, daß die Ladestation entweder mit der Basisstation oder mit einer separaten Speiseleitung verbunden ist. Dagegen bedeutet Unterbrechung der Stromzufuhr von außen, daß die Ladestation von der Basisstation abgenommen ist oder daß die separate Speiseleitung von der Ladestation abgenommen wurde. Die Umschalteinrichtung muß in der Lage sein, diese Zustände zu erkennen, wozu sie mit einer geeigneten mechanischen oder elektrischen Detektoreinrichtung zusammenarbeitet.

In Weiterbildung der Erfindung kann sich der Akkumulator der Ladestation auch in einem separaten und von ihr abnehmbaren Gehäuseteil befinden. Ansonsten bliebe die Ladestation weiterhin mit der Basisstation verbindbar. Um den separaten Gehäuseteil könnte die Ladestation dann wahlweise ergänzt werden, falls dies aus bestimmten Gründen für erforderlich erachtet wird.

Jede Ladestation kann darüber hinaus so ausgebildet sein, daß sie gleichzeitig mehrere Schnurlostelefone aufnehmen und deren Akkumulatoren aufladen kann. Dies erfolgt dann im Parallelbetrieb. Beispielsweise könnte die Ladestation mit zwei nebeneinanderliegenden Ausnehmungen zur Aufnahme jeweils eines Schnurlostelefons ausgestattet sein.

Ausführungsbeispiele der Erfindung werden nachfolgend unter Bezugnahme auf die Zeichnung näher beschrieben. Es zeigen:
**Figur 1** eine aus Basisstation und Ladestation bestehende Einrichtung in einem Zustand, in welchem die Ladestation von der Basisstation abgenommen ist;
**Figur 2** eine aus Basisstation und Ladestation bestehende Einrichtung in einem Zustand, in welchem die Ladestation auf die Basisstation aufgesetzt ist;
**Figur 3** eine perspektivische Ansicht der Ladestation von schräg unten;
**Figur 4** eine perspektivische Ansicht der Basisstation von schräg oben mit einem auf sie aufsetzbaren Deckel;
**Figur 5** eine vergrößerte Darstellung einer mechanischen und elektrischen Verbindungseinrichtung zur Verbindung von Basisstation und Ladestation miteinander;
**Figur 6** einen Längsschnitt durch die aus Basisstation und Ladestation bestehende Einrichtung mit eingesetztem Schnurlostelefon;
**Figur 7** einen Längsschnitt nur durch die Ladestation mit eingesetztem Schnurlostelefon;
**Figur 8** einen Längsschnitt durch eine Andere Ausführungsform der Ladestation mit eingesetztem Schnurlostelefon; und
**Figur 9** eine perspektivische Ansicht der Ladestation von Figur 7 oder 8 mit eingesetztem Schnurlostelefon.

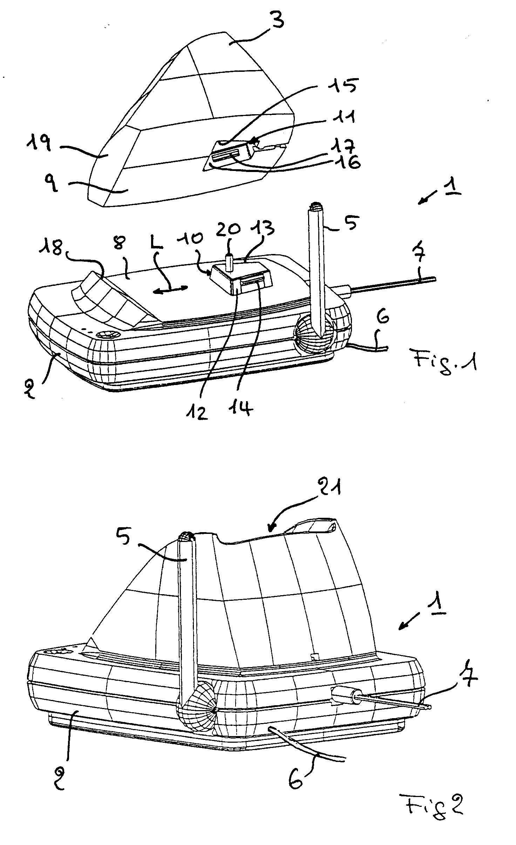

Die Figur 1 zeigt eine erfindungsgemäße Einrichtung 1, bestehend aus einer Basisstation 2 und wenigstens einer Ladestation 3. Hier sind die Basisstation 2 und die Ladestation 3 getrennt voneinander dargestellt.

Die Basisstation 2 steht über eine Funkstrecke mit einem oder mehreren Schnurlostelefonen 4 bzw. Handys in Verbindung, von denen eines in Figur 9 gezeigt ist. Zum Aufbau der Funkstrecke ist die Basisstation 2 mit einer verschwenkbaren Antenne 5 versehen. Über eine Datenleitung 6 ist die Basisstation 2 mit einem öffentlichen oder privaten Fernsprechnetz verbunden. Mehrere zur Basisstation 2 gehörende Schnurlostelefone 4 können somit über die Basisstation 2 Funkkontakt miteinander haben oder über die Basisstation 2 und die Datenleitung 6 sowie das genannte Fernsprechnetz mit einem anderen Teilnehmer dieses Netzes in Verbindung stehen. Zur Energieversorgung der innerhalb der Basisstation 2 vorhandenen und nicht dargestellten Sende- und Empfangseinrichtungen ist die Basisstation 2 mit einer Speiseleitung 7 verbunden, die über ein Netzteil versorgt wird, daß am örtlichen Stromnetz angeschlossen ist. Beispielsweise liegt an der Speiseleitung 7 eine Gleichspannung von 6 V an.

Um die Ladestation 3 auf die Basisstation 2 aufsetzen zu können, ist die Basisstation 2 mit einer oberen Aufnahmefläche 8 versehen, die im vorliegenden Fall als ebene Fläche ausgebildet ist. Entsprechend weist die Ladestation 3 an ihrer unteren Seite eine ebene Aufsetzfläche 9 auf. Beide Flächen 8 und 9 müssen allerdings nicht eben sein, sondern könnten auch Krümmungen aufweisen. Allerdings müßten sie dann in gleicher Weise gekrümmt sein, damit sie passend aufeinander zu liegen kommen.

Im Bereich dieser Flächen 8 und 9 auf der Längsachse der Einrichtung liegend und etwas in Richtung zur Speiseleitung 7 verschoben, befindet sich eine mechanische und elektrische Verbindungseinrichtung zur mechanischen und elektrischen Verbindung von Basisstation 2 und Ladestation 3 miteinander.

Die mechanische Verbindungseinrichtung besteht aus einem über die Aufnahmefläche 8 hinausstehenden Sockel 10 und einer etwa die gleiche Form aufweisenden Ausnehmung 11 in der unteren Aufsetzfläche 9 der Ladestation 3. Die Umfangsformen von Sockel 10 und Ausnehmung 11 sind so gewählt, daß es für die Ladestation 3 nur eine Position relativ zur Basisstation 2 gibt, in der sie auf die Aufnahmefläche 8 der Basisstation 2 aufgesetzt werden kann. Nur in dieser Position greift der Sockel 10 passend in die Ausnehmung 11 ein. Im vorliegenden Fall sind der Sockel 10 und die Ausnehmung 11 jeweils parallel zu den Flächen 8 und 9 gesehen trapezförmig ausgebildet. Dabei liegen die parallelen Trapezseiten senkrecht zur Längsrichtung des Handapparats 1. Die schräg verlaufenden Trapezseiten verlaufen jeweils unter einem Winkel zu dieser Längsrichtung. Sie ist in Figur 1 mit dem Bezugszeichen L gekennzeichnet.

Der Sockel 10 weist im Bereich seiner schräg verlaufenden Trapezseiten 12 und 13 jeweils eine federnd ausgebildete Rastnase 14 auf, die über diese Seiten 12, 13 nach außen hervorstehen und durch Federkraft nach außen vorgespannt sind. Demgegenüber befinden sich an den schräg verlaufenden Trapezseiten 15 und 16 der Ausnehmung 11 Einkerbungen 17 für die genannten Rastnasen 14. In Figur 1 ist nur die Rastnase 14 an der Trapezseite 12 des Sockels 10 zu erkennen. Die Rastnase an der Trapezseite 13 ist durch den Sockel 10 abgedeckt. Entsprechendes gilt für die Einkerbungen 17. Hier ist aufgrund der gewählten Positionierung der Ladestation 3 nur die Einkerbung 17 an der Trapezseite 16 zu erkennen. Liegen die Flächen 8 und 9 aufeinander, so greifen also die Rastnasen 14 in die jeweiligen Einkerbungen 17 ein und stellen somit eine sichere Verbindung zwischen der Basisstation 2 und der Ladestation 3 dar. Eine Verdrehung der Ladestation 3 relativ zur Basisstation 2 ist danach infolge der gewählten Form der mechanischen Verbindungseinrichtung 10, 11 nicht mehr möglich. Eine zusätzliche Verdrehsicherung ergibt sich aufgrund einer von der Aufnahmefläche 8 abgewinkelten Fläche 18 im vorderen Bereich der Basisstation 2, gegen die eine von der Aufsetzfläche 9 abgewinkelte Fläche 19 der Ladestation 3 schlägt, wenn die Flächen 8 und 9 aufeinanderliegen.

In die mechanische Verbindungseinrichtung 10, 11 ist eine elektrische Verbindungseinrichtung integriert.

Es handelt sich hier zum einen um einen Stecker 20, der senkrecht von der oberen Fläche des Sockels 10 absteht. Dieser Stecker 20 ist zweipolig ausgebildet und führt eine Speisespannung sowie Erdpotential zur Ladestation 3. Hierzu ist die Ladestation 3 im Bereich ihrer Ausnehmung 11 mit einer entsprechenden und im vorliegenden Fall nicht erkennbaren Muffe ausgestattet, in die der Stecker 20 eingeführt ist, wenn die Ladestation 3 mit ihrer Aufsetzfläche 9 auf der Aufnahmefläche 8 der Basisstation 2 aufliegt.

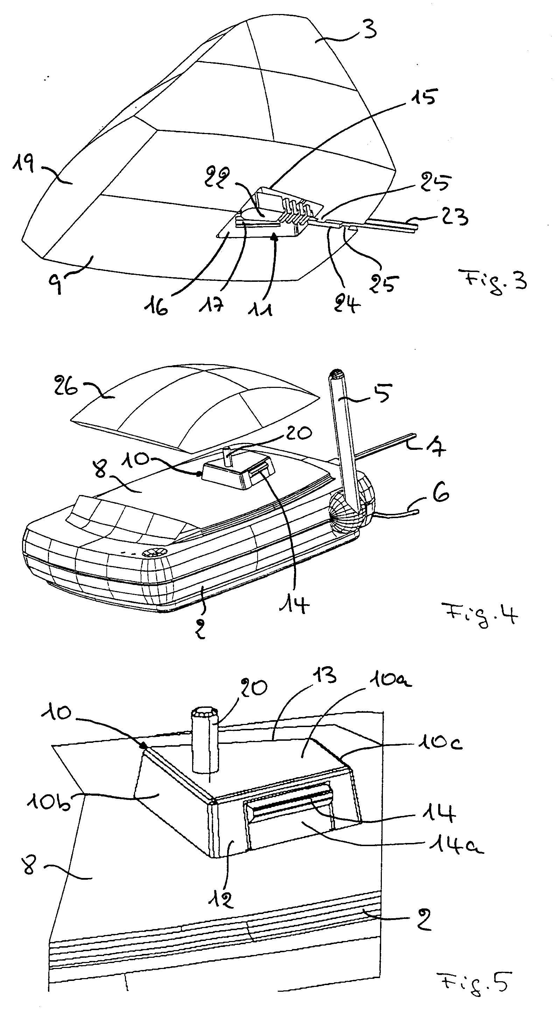

In Figur 2 ist die erfindungsgemäße Einrichtung 1 in einem Zustand gezeigt, in welchem die Ladstation 3 auf die Basisstation 2 aufgesetzt ist. Hier werden über die Speiseleitung 7 Versorgungspotential und Erdpotential sowie über die elektrische Verbindungseinrichtung 20 auch zur Ladestation 3 geführt bzw. zu der in der Ladestation 3 vorhandenen Ladeschaltung. Die Ladestation 3 ist im vorliegenden Fall nicht mit einem Schnurlostelefon bestückt. Zu erkennen ist nur eine zur Aufnahme eines Schnurlostelefons 4 vorgesehene Aufnahme 21 in der Ladestation 3. Befindet sich ein Schnurlostelefon 4 in dieser Aufnahme 21, so steht der Akkumulator des Schnurlostelefons 4 über eine geeignete Kontakteinrichtung mit der Ladeschaltung der Ladestation 3 in elektrischer Verbindung.

Die Figur 3 zeigt eine perspektivische Ansicht der Ladestation 3 von schräg unten. Wie bereits erwähnt, befindet sich zur Aufnahme des Steckers 20 eine entsprechend ausgebildete Muffe im Bereich der zur Aufsetzfläche 9 parallelen Fläche der Ausnehmung 11. Ist die Ladestation 3 von der Basisstation 2 abgenommen, so kann in diese Muffe auch ein Stecker 22 eingeführt werden, der mit einer weiteren Speiseleitung 23 verbunden ist, um auf diese Weise Versorgungs- und Erdpotential zur Ladeschaltung der Ladestation 3 zu übertragen. Die weitere Speiseleitung 23 kann z. B. über ein Netzteil mit der örtlichen Stromversorgung verbunden sein. Um die Ladestation 3 für diesen Fall mit ihrer Aufsetzfläche 9 auf eine geeignete Unterlage aufsetzen zu können, wird die weitere Speiseleitung 23 durch einen in der Aufsetzfläche 9 vorgesehenen Kanal 24 geführt, der sich von der Ausnehmung 11 zur rückwärtigen Seite der Ladestation 3 erstreckt. Dabei sind quer zum Kanal verlaufende Zungen 25 vorgesehen, die ein Herausfallen der weiteren Speiseleitung 23 aus dem Kanal 24 verhindern und auch als Zugentlastung wirken können.

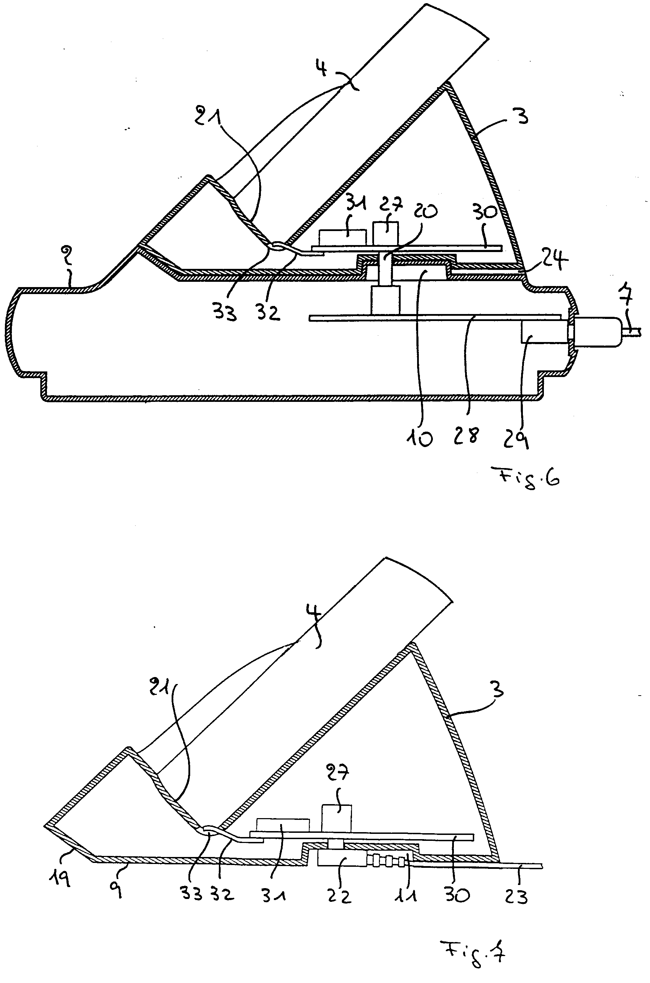

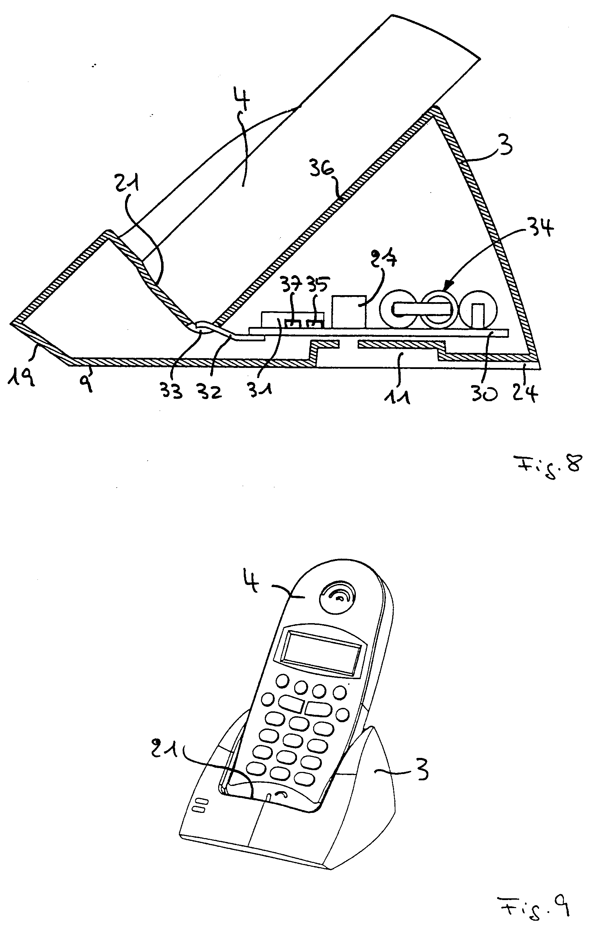

Die Figur 4 zeigt die Basisstation 2 ohne Ladestation 3. Wird die Basisstation 2 in diesem Zustand verwendet, so kann auf sie zur Sicherung der mechanischen und elektrischen Verbindungseinrichtung ein Deckel 26 aufgesetzt werden. Dieser Deckel 26 ist in seinem unteren Bereich identisch zum unteren Bereich der Ladestation 3 ausgebildet und läßt sich somit über die Rastnasen 14 an der Basisstation 2 befestigen. Auch er läßt sich nur In einer bestimmten Position auf die Aufnahmefläche 8 aufsetzen. Auf diese Weise läßt sich das Design der Basisstation 2 in ihrem oberen Bereich harmonisch durch den Deckel 26 ergänzen.

Die Figur 5 zeigt einen vergrößerten Ausschnitt der Basisstation 2 im Bereich des Sockels 10. Der Sockel 10 ist, wie bereits erwähnt, trapezförmig ausgebildet und steht über die Aufnahmefläche 8 hervor. Seine obere Fläche 10a liegt parallel zur Aufnahmefläche 8, während seine senkrecht zur Längsrichtung L verlaufenden Seitenflächen 10b, 10c sowie seine Seiten 12 und 13 in Richtung zum freien Sockelende aufeinander zu laufen. Der gesamte Sockel 10 verjüngt sich somit in Richtung zu seinem freien Ende. Entsprechendes gilt in umgekehrter Richtung für die Ausnehmung 11.

Die Rastnasen 14 befinden sich am oberen bzw. freien Ende einer jeweiligen Lasche 14a, welche im Ruhezustand mit den Seitenwänden 12 bzw. 13 fluchtet, so daß dann die Rastnase 14 über die jeweilige Seitenwand 12, 13 hinaussteht. Die Lasche 14a kann z. B. an der Aufnahmefläche 8 angelenkt oder einstückig mit dieser schwenkbar verbunden sein, so daß sie sich in eine entsprechende Ausnehmung des Sockels 10 entgegen einer Federkraft hineindrücken läßt. Dies geht so weit, daß die Spitze der Rastnase 14 in der jeweiligen Seitenfläche 12, 13 zu liegen kommt. Das Eindrücken der Rastnasen 14 in die Ausnehmung des Sockels 10 erfolgt durch die Innenwände 15, 16 der Ausnehmung 11, wenn in diese der Sockel 10 eingeführt wird. Um diesen Vorgang zu erleichtern, können die Rastnasen 14 zu ihrem freien Ende hin abgeschrägt sein. Um die Rastnasen 14 elastisch zu lagern, können die Laschen 14a als federnde Laschen ausgebildet sein oder durch eine Feder vorgespannt sein, die hinter den jeweiligen Laschen 14a, also zwischen ihnen und dem Sockel 10, zu liegen kommt.

Die Figur 6 zeigt einen Längsschnitt durch die erfindungsgemäße Einrichtung, also einen Schnitt entlang der Linie L in Figur 1. Im vorliegenden Fall ist die Ladestation 3 auf die Basisstation 2 aufgesetzt und mechanisch sowie elektrisch mit dieser verbunden. Der Sockel 10 greift dabei in die Ausnehmung 11 ein, so daß über die Rastnasen 14 eine feste Verbindung zwischen Basisstation 2 und Ladestation 3 erreicht wird. Der aus dem Sockel 10 hervorstehende Stecker 20 ist in die Muffe 27 der Ladestation 3 eingeführt, so daß auch eine elektrische Verbindung zwischen dem Versorgungsteil der Basisstation 2 und der Ladestation 3 vorhanden ist. Stecker 20 und Muffe 27 sind jeweils zweipolig ausgeführt, um Speisepotential und Erdpotential übertragen zu können.

Der Stecker 20 wird u. a. von einer Leiterplatte 28 getragen, die sich im Innern der Basisstation 2 befindet. Diese Leiterplatte 28 ist mit einem Durchführungselement 29 verbunden, das an der hinteren Wand der Basisstation 2 befestigt ist und zur Durchführung der Speiseleitung 7 ins Innere der Basisstation 2 dient. Die elektrische Verbindung zwischen Speiseleitung 7 und Stecker 20 folgt durch geeignete Leitungsführung auf der Leiterplatte 28.

Innerhalb der Ladestation 3 liegt parallel zu deren Bodenfläche eine weitere Leiterplatte 30. Sie ist dort in geeignete Weise befestigt und trägt die bereits erwähnte Muffe 27 für die Aufnahme des Steckers 20. Auf der Leiterplatte 30 befindet sich ferner eine Ladeschaltung 31, die elektrisch mit der Muffe 27 in Verbindung steht und zur Aufladung eines Schnurlostelefons 4 dient, das in die bereits erwähnte Aufnahme 21 der Basisstation 3 eingesetzt wird. In diesem Fall steht ein mit der weiteren Leiterplatte 30 verbundener Anschlußkontakt 32 einerseits mit der Ladeschaltung 31 und andererseits mit einem Kontakt des Schnurlostelefons 4 in elektrischer Verbindung, der seinerseits zu dem im Schnurlostelefon 4 untergebrachten Akkumulator führt. Der Anschlußkontakt 32 durchragt dabei eine bodenseitige Öffnung 33 der Aufnahme 21.

Ein der Figur 6 entsprechender Längsschnitt nur durch die Ladestation 3 ist in Figur 7 gezeigt. Gleiche Elemente wie in Figur 6 sind mit den gleichen Bezugszeichen versehen und werden nicht nochmals beschrieben. Im Unterschied zur Darstellung nach Figur 6 ist gemäß Figur 7 der Stecker 22 in die Muffe 27 eingeführt. Über diesen mit der weiteren Speiseleitung 23 verbundenen Stecker 22 werden ebenfalls Speisepotential und Erdpotential zur Ladestation 3 übertragen, jetzt jedoch von einem nicht dargestellten Netzteil, das seinerseits mit der örtlichen Stromversorgung verbunden werden kann.

Die Figur 8 zeigt einen der Figur 7 entsprechenden Längsschnitt durch eine weitere Ladestation 3, die äußerlich der Ladestation 3 nach Figur 7 entspricht. Gleiche Teile sind wiederum mit den gleichen Bezugszeichen versehen und werden nicht nochmals beschrieben.

Im Unterschied zur Ladestation 3 nach Figur 7 befindet sich bei der Ladestation 3 nach Figur 8 noch ein Akkumulator 34 auf der weiteren Leiterplatte 30. Über diesen Akkumulator 34 läßt sich ein in die Ladestation 3 eingesetztes schnurloses Telefon 4 in der zuvor beschriebenen Weise laden, wenn die Ladestation 3 nicht mit einer äußeren Stromversorgung verbunden ist. Zu diesem Zweck steht der Akkumulator 34 in geeigneter Weise mit der Ladeschaltung 31 in elektrischer Verbindung. Ist dagegen die Ladestation 3 mit einer äußeren Stromversorgung verbunden, beispielsweise mit der Speiseleitung 23 über den Stecker 22 gemäß Figur 7 einerseits oder mit der Speiseleitung 7 über den Stecker 20 gemäß Figur 6 andererseits, so ist es möglich, sowohl den Akkumulator des Schnurlostelefons 4 über die Ladeschaltung 31 als auch über die Ladeschaltung 31 den Akkumulator 34 aufzuladen. Dies kann gleichzeitig oder zu verschiedenen Zeiten geschehen, je nach dem, ob dem einen oder dem anderen Akkumulator Priorität eingeräumt wird. Eine entsprechende Prioritätssteuerung kann in der Ladeschaltung 31 vorhanden sein. Die Ladeschaltung 31 kann ebenfalls eine Detektoreinrichtung enthalten, durch die festgestellt wird, ob die Ladestation 3 mit einer äußeren Stromversorgung, also mit einem der Stecker 20 oder 22 verbunden ist oder nicht. Diese Detektorschaltung ist mit dem Bezugszeichen 35 versehen.

Mit der Detektorschaltung 35 ist elektrisch eine Umschalteinrichtung 37 verbunden, die zur Ansteuerung bzw. Umschaltung der Ladeschaltung 31 dient. Wird durch die Detektorschaltung 37 detektiert, daß die Ladestation 3 von außen mit Strom versorgt wird, so schaltet die Umschalteinrichtung 37 die Ladeschaltung 31 in einen Zustand, in welchem der Akkumulator des Schnurlostelefons 4 und/oder der Akkumulator 34 der Ladestation 3 aufgeladen werden können, je nach Prioritätsvorgabe. Detektiert die Detektorschaltung 35 dagegen, daß für die Ladestation 3 keine äußere Stromversorgung vorhanden ist, so schaltet die Umschalteinrichtung 37 in Abhängigkeit dieses Detektorergebnisses die Ladeschaltung 31 so um, daß jetzt der Akkumulator des Schnurlostelefons 4 vom Akkumulator 34 der Ladestation 3 aufgeladen wird.

Nach einer Ausgestaltung der Erfindung kann sich der Akkumulator 34 auch in einem eigenen Gehäuseteil befinden, welches von der Ladestation 3 abgenommen werden kann. Dies ist nicht mehr im einzelnen dargestellt. Dieses Gehäuseteil kann zusätzlich erworben und wahlweise an die Ladestation 3 angefügt werden, wenn die weitere Funktion des Aufladens des Schnurlostelefons 4 durch einen Akkumulator 34 gewünscht wird. Die Verbindungsfläche zwischen dem zusätzlichen Gehäuseteil und der restlichen Ladestation 3 kann dann so zu liegen kommen, daß sie parallel zu der hinteren Wand 36 der Aufnahme 21 liegt. Die bei abgenommenem zusätzlichen Gehäuseteil hintere Wand der Ladestation 3 läge dann ebenfalls parallel zur hinteren Wand 36 der Aufnahme 21, so daß über die hintere Wand der Ladestation 3 letztere senkrecht aufgehängt werden könnte. Das in der Aufnahme 21 befindliche Schnurlostelefon 4 würde dann etwa senkrecht stehen. Auch in diesem Fall könnte dafür gesorgt werden, daß eine Aufladung des Akkumulators des Schnurlostelefons 4 weiterhin über die Versorgungsleitung 23 und den Stecker 22 möglich wäre.

Die Figur 9 zeigt die Ladestation 3 mit dem in die Aufnahme 21 eingesetzten Schnurlostelefon 4 in perspektivischer Ansicht von schräg vorn. Prinzipiell konnte die Ladestation 3 auch so ausgestaltet sein, daß sie zwei oder mehrere nebeneinanderliegende Ausnehmungen 21 aufweist, in die jeweils eines der Schnurlostelefone 4 eingesetzt werden kann, um aufgeladen zu werden. Dabei kann der Aufladevorgang parallel erfolgen. Möglich ist es auch, die Aufnahmen 21 unterschiedlich zu gestalten, um unterschiedliche Fabrikate von Schnurlostelefonen 4 aufnehmen und aufladen zu können. Die Lage der Anschlußkontakte 32 und die Lage der zugehörigen Öffnungen 33 könnten entsprechend gewählt werden.

## Patentansprüche

1. Einrichtung (1) für Schnurlostelefone (4), zu der eine Basisstation (2) und wenigstens eine Ladestation (3) gehören, um über die Ladestation (3) einen Akkumulator eines Schnurlostelefons (4) zu laden, wenn sich dieses in der Ladestation (3) befindet, **gekennzeichnet durch** eine mechanische Verbindungseinrichtung (10, 11, 14, 17) zur lösbaren Verbindung von Ladestation (3) und Basisstation (2) miteinander.

2. Einrichtung nach Anspruch 1, **dadurch gekennzeichnet**, daß die Ladestation (3) aufeine obere Fläche (8) der Basisstation (2) aufsetzbar ist.

3. Einrichtung nach Anspruch 2, **dadurch gekennzeichnet,** daß die mechanische Verbindungseinrichtung (10, 11, 14, 17) im Bereich der oberen Fläche (8) der Basisstation (2) liegt.

4. Einrichtung nach Anspruch 1, 2 oder 3, **dadurch gekennzeichnet,** daß die mechanische Verbindungseinrichtung (10, 11, 14, 17) ein Rast-/Schnappmechanismus ist.

5. Einrichtung nach einem der Ansprüche 1 bis 4, **dadurch gekennzeichnet,** daß Positionierungsmittel (10b, 10c, 12, 13) vorhanden sind, um die Ladestation (3) relativ zur Basisstation (2) zu positionieren, wenn beide miteinander verbunden sind.

6. Einrichtung nach Anspruch 6, **dadurch gekennzeichnet,** daß als Positioniermittel Teile der mechanischen Verbindungseinrichtung dienen.

7. Einrichtung nach einem der Ansprüche 1 bis 6, **gekennzeichnet durch** eine elektrische Verbindungseinrichtung (20, 27) zur elektrischen Verbindung von Ladestation (3) und Basisstation (2) miteinander, wenn diese mechanisch miteinander verbunden sind.

8. Einrichtung nach Anspruch 7, **dadurch gekennzeichnet,** daß die elektrische Verbindungseinrichtung (20, 27) im Bereich der oberen Fläche (8) der Basisstation (2) angeordnet ist.

9. Einrichtung nach Anspruch 7 oder 8, **dadurch gekennzeichnet,** daß die elektrische Verbindungseinrichtung (20, 27) als Steckverbindung ausgebildet ist.

10. Einrichtung nach Anspruch 7, 8 oder 9, **dadurch gekennzeichnet,** daß die elektrische Verbindungseinrichtung (20, 27) in die mechanische Verbindungseinrichtung (10, 11, 14, 17) integriert ist.

11. Einrichtung nach einem der Ansprüche 7 bis 10, **dadurch gekennzeichnet,** daß die mechanische Verbindungseinrichtung auch als elektrische Verbindungseinrichtung ausgebildet ist.

12. Einrichtung nach einem der Ansprüche 1 bis 11, **dadurch gekennzeichnet,** daß die Ladestation (3) außer einer Ladeschaltung (31) einen Akkumulator (34) enthält.

13. Einrichtung nach Anspruch 12, **dadurch gekennzeichnet,** daß die Ladestation (3) eine Umschalteinrichtung (37) zur Umschaltung der Ladeschaltung (31) enthält, derart, daß durch diese bei Stromzufuhr von außen die Akkumulatoren sowohl des Schnurlostelefons (4) als auch der Ladestation (3) aufladbar sind, während bei Unterbrechung der Stromzufuhr von außen der Akkumulator des Schnurlostelefons (4) durch den Akkumulator (34) der Ladestation (3) aufladbar ist.

14. Einrichtung nach Anspruch 12 oder 13, **dadurch gekennzeichnet,** daß sich der Akkumulator (34) der Ladestation (3) in einem separaten und von ihr abnehmbaren Gehäuseteil befindet.

15. Einrichtung nach einem der Ansprüche 1 bis 14, **dadurch gekennzeichnet,** daß jede Ladestation (3) mehrere Schnurlostelefone (4) gleichzeitig aufnehmen und laden kann.
